**Europäisches Patentamt**

**European Patent Office**

**Office européen des brevets**

(11) Veröffentlichungsnummer: **0 056 573**
A2

(12) # EUROPÄISCHE PATENTANMELDUNG

(21) Anmeldenummer: 82100035.3

(22) Anmeldetag: 05.01.82

(51) Int. Cl.³: **B 01 J 13/02**
B 01 J 2/00, A 23 G 3/26
A 61 J 3/06

(30) Priorität: 06.01.81 IT 330281

(43) Veröffentlichungstag der Anmeldung:
28.07.82 Patentblatt 82/30

(84) Benannte Vertragsstaaten:
DE FR GB IT

(71) Anmelder: G.S. DI SCIPIONI & GIOGOLI S.n.c.
Via Puglie, 27
I-40060 Osteria Grande (Bologna)(IT)

(72) Erfinder: Giogoli, Antonio
Via Capelli 7
I-40127 Bologna(IT)

(72) Erfinder: Scipione, Angelo
Via M. Scarselli, 247
I-40060 Osteria Grande (Bologna)(IT)

(74) Vertreter: Borella, Ada
Ing. A. Racheli & C. Viale San Michele del Carso, 4
I-20144 Milan(IT)

(54) **Drehtrommelvorrichtung zum Überziehen loser Produkte.**

(57) Die vorliegende Erfindung betrifft mit Schaufeln (9) ausgestattete Drehtrommelvorrichtungen, in die auf eine Masse (36) von zu überziehenden Tabletten, Rauten, Körnern, die sich durch das Drehen der Trommel (30) in schräger Lage befinden, eine einen verflüchtigenden Bestandteil enthaltende Flüssigkeit, die den Überzug der Kompressen oder Körner verwirklicht, aufgespritzt wird, während vorgesehen ist, durch ein Luftförder- und Ansaugsystem den verflüchtigenden Bestandteil des Fluids zu verdampfen. Dabei ist weiter vorgesehen, dass das Bespritzen in einem Bereich nahe der Oberfläche (34) des sich in der Trommel in Bewegung befindlichen losen Produktes erfolgt, während die Lufteinblasung in zwei vorzugsweise gleiche Teil geteilt in gelochten Schaufeln (23) vorgesehen ist, die in die Masse (36) des losen Produktes und über eine Mundung (33) auf Oberfläche des sich bewegenden Produktes in einem möglichst weit von der Spritzzone entfernten Abstand eingeführt werden.

FIG. 2

EP 0 056 573 A2

Anmelder:

G. S. DI SCIPIONI E GIOGOLI S.n.c.

Via Puglie N. 27

40060 OSTERIA GRANDE (Bo)

Drehtrommelvorrichtung zum Überziehen loser Produkte

Die vorliegende Erfindung betrifft eine mit veränderlicher Geschwindigkeit und Schaufeln ausgestattete Drehtrommel zur Durchführung eines Überzuges auf lose Produkte, die in die Trommel eingeführt und mit flüssiger Lösung, insbesondere Wasser, worin die Überzugsstoffe gelöst oder gestreut werden, bespritzt werden. Diese Überzugsstoffe haften dann an die losen Produkte, während die flüssige Substanz von einem in die Trommel eingelassenen Warmluftstrom, der später abgesaugt wird, verdampft wird. Unter lose zu überziehende Produkte sind Körner, Rauten, Mikrokugeln, Dragée, Kaugummi, Eiformen, Mandeln und alle anderen zu überziehenden Artikel dieser Art zu verstehen.

Es sind bereits verschiedene Maschinen dieser Art bekannt.
Einige sehen die Luftzufuhr und -ansaugung durch eine gelochte Seitenwand der Trommel vor. Dadurch wird ein hoher Luftbedarf, Reinigungsprobleme im Trommelinnern und die Begrenzung
der Trommel auf einige Arten der zu überziehenden Produkte verursacht, sodass beispielsweise Mikrokugeln von der Verarbeitung ausgeschlossen sind. Ausserdem ermöglicht die bekannte
Trommel keine Verwendung der Schaufeln in der gelochten Zone
und begrenzt dadurch die homogene Mischfähigkeit mit daraus
folgender starker Reduzierung des Umfanges der einzelnen
losen Produkte, die überzogen werden können.

Andere bekannte Systeme sehen sowohl das Einführen als das
Ansaugen der Luft aus dem Innern der losen zu überziehen Masse
vor. Diese Lösung hat den Nachteil des erhöhten Energieverbrauches,
da die Luft bedeutende Förderhöhen überwinden muss.

Alle bekannten Systeme benötigen lange Verweilzeiten in der
Trommel, was besonders unvorteilhaft ist, wenn das zu
überziehende Produkt nicht besonders hart ist oder vor allem,
wenn die Überzugslösung eine wässerige Lösung ist, die
normalerweise in kurzer Zeit das zu überziehende Produkt
verdirbt.

Die Erfindung hat sich deshalb zur Aufgabe gemacht, eine
schnellere Verdampfung des Lösungsmittels zu verwirklichen,
wobei eine starke Reduzierung der Überzugszeiten, d. h. ein

besseres Endprodukt und eine bessere Energieverwendung in der Luftzirkulation erhalten und auf diese Weise infolge der geringeren Leistung der aufgestellten Motoren eine Energieersparnis verwirklicht wird, wobei gleichzeitig eine weitaus billigere Vorrichtung als die bisher im Handel befindlichen Vorrichtungen zur Verfügung gestellt werden kann.

Eine weiterer Zweck der Erfindung besteht darin, eine leichtere und wirksamere Reinigung der Trommel zu ermöglichen und eine Verunreinigung der Produkte, die anschliessend in derselben Trommel bearbeitet werden, zu vermeiden.

Die vorgenannte Aufgabe wurde erfindungsgemäss dadurch erreicht, dass in einer Überzugsdrehtrommel vorgesehen ist, dass die Luftförderung in zwei vorzugsweise gleiche Teile geteilt wird, wobei der erste Teil in die zu überziehende Masse eintritt, während der zweite Teil ausserhalb der Masse auf der ganzen Oberfläche axial zur Trommel in unmittelbarer Nähe der Oberfläche des sich in Bewegung befindlichen zu überziehenden Produktes verteilt wird.

Eine bevorzugte Lösung sieht vor, dass der Lufteinlass im Innern der zu überziehenden Produktmasse durch eine gewisse Anzahl gelochter Schaufeln verwirklicht wird, die eine zu dem zu überziehenden Material, das von den Schaufeln geteilt wird, gerichtete volle abgerundete Oberfläche und eine fast stromlinienförmige Oberfläche aufweist, die sich der natürlichen Bewegung des Produktes anpasst, d.h. dem Schliessen des Produktes folgt. Dieser zweite Teil wird gelocht ausgeführt, während der erste Teil glatt und abgerundet ist, um das mit den vorderen Oberflächen der Schaufeln, die die Masse öffnen, in Berührung kommende Produkt nicht zu beschädigen.

Vorteilhafterweise ist die nicht in die zu behandelnde Masse eingetauchte Mündung der Luftförderung von einer parallel zur Achse der Trommel fortlaufenden verlängerten Oberfläche gebildet, die in nächster Nähe der Oberfläche der zu überziehenden Masse, wenn sie in Bewegung ist, angeordnet ist.

Die Mündung der Luftförderung ist so in der Trommel angeordnet, dass sie so weit als möglich vom Spritzbereich des Fluids entfernt ist.

Vorzugsweise ist vorgesehen, dass die Fördermündung dieser äusseren Luft von einem biegsamen Schlauch umgeben ist, der dem ständigen Erhöhen des Volumens der Masse des zu überziehenden Produktes folgen kann. -

Andere bevorzugte Lösungen der Erfindungen sehen eine Regelung der Position der Fördermündung der Luft vor, damit sie von Fall zu Fall an die Qualität und an die Art des zu behandelnden Produktes und an die Geschwindigkeit der Trommel angepasst werden können, sodass diese Fördermündungen in bestmöglicher Weise angeordnet werden können. Insbesondere kann eine automatische Regelung durch Fühler vorgenommen werden, die den wachsenden Stand der zu überziehenden Masse festestellen.

Die Erfindung wird nachstehend anhand des in der Zeichnung

dargestellten Ausführungsbeispieles dargestellt. Es zeigen:

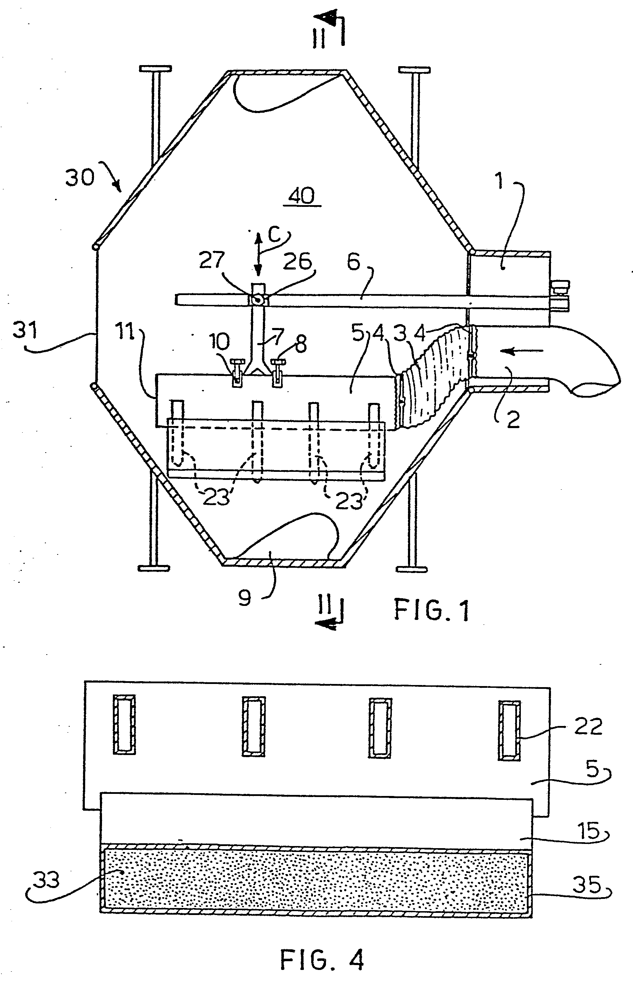

Fig. 1 einen Längsschnitt durch eine mit der erfindungsgemässen Vorrichtung ausgestatteten Überzugstrommel,
der dem Schnitt längs der Linie I-I in Fig. 2 entspricht,

Fig. 2 einen Schnitt längs der Linie II-II in Fig. 1,

Fig. 3 eine vergrösserte Ansicht eines Schnittes längs der
Linie III-III in Fig. 2 und

Fig. 4 eine vergrösserte Ansicht eines Schnittes längs der
Linie IV-IV der Fig. 2.


Aus den Figuren ist ersichtlich, dass die Schaufeln 9 aufweisende Trommel 30 eine innere Kammer 40 bildet. An einem
Ende der Trommel 30 ist eine nicht hermetisch abschliessende Türe 31 zur Beladung mit dem Produkt vorgesehen. Am anderen Ende ist ein Kasten 1 vorgesehen, in dem die Luftansaugung
und die Förderung durch das Rohr 2 erfolgt. Das Rohr 2 ist mit
einer biegsamen Muffe 3 mit Haltebügel 4 am Rohr 2 und an einem
Verteilerrohr 5 befestigt. Das Verteilerrohr 5 ist an einem
Träger 6 gelagert, der ebenfalls eine sowohl in der Höhe
(Pfeilrichtung C) als auch bezüglich des Drehwinkels um den
Träger 6 (Pfeilrichtung D) durch einen Bund 26 und einen
Knopf 27 regelbare Stange 7 trägt. Die Stange 7 ist durch Nuten
10 und Knöpfe 8 am Verteilerrohr 5 so befestigt, dass die
Stellung des Verteilerrohres 5 in Pfeilrichtung B geregelt
werden kann. Das Rohr 5 ist durch eine Trennwand 12 in zwei
Teile 13 und 14 getrennt, in die die Luft gefördert wird.
Die Trennwand 12 ist so angeordnet, dass die Luft in zwei
fast gleiche Teile geteilt wird. Der Teil 14 ist über die

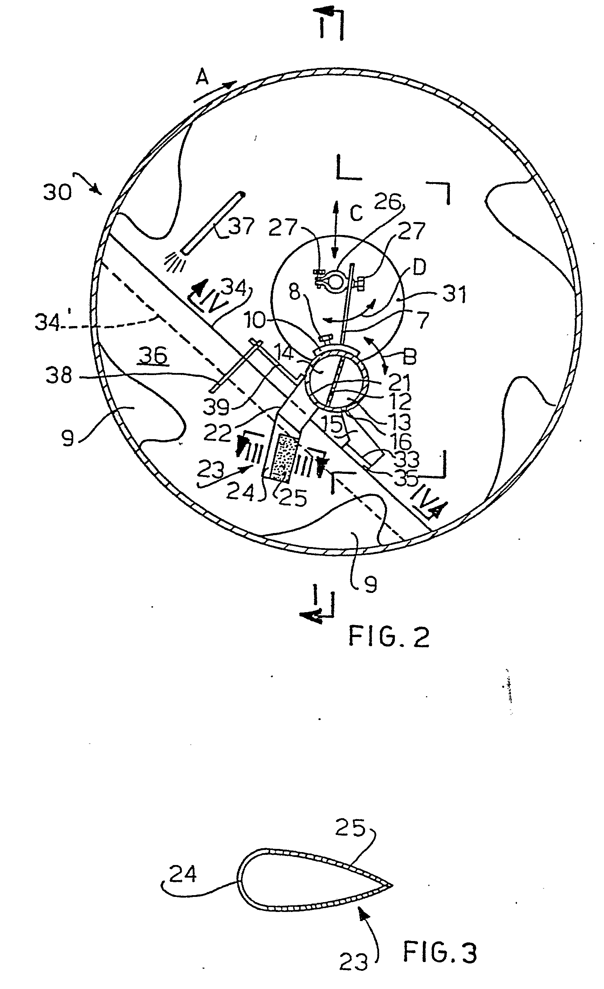

Öffnungen 21 und die Leitungen 22 mit den im dargestellten Beispiel vorgesehenen vier Schaufeln 23 verbunden. Jede Schaufel 23 hat einen vorderen Teil 24 in Drehrichtung der Trommel (Pfeil A in Fig. 2) und einen rückwärtigen Teil 25, aus dem die Luft austritt. Es ist ersichtlich, wie dieser rückwärtige Teil 25 stromlinienförmig angeschlossen ist, sodass es nicht möglich ist, dass die Masse des Produktes 36, die auf der vorderen Seite 24 der Schaufel geöffnet worden ist, rückwärts einen Raum freilässt, aus dem die Förderluft, die von dem gelochten Teil 25 kommt, austreten könnte.

Der zweite Teil 13 des Verteilerrohres 5 ist mit einem eingepassten Schlitz 16 versehen, der eine homogene Luftmenge in der Kammer 40 verwirklicht. Der Schlitz 16 ist mit einem Förderer 15 verbunden, der in eine verlängerte Mündung 33, die von einer entsprechenden biegsamen Muffe 35 umgeben ist, einmündet. Die Mündung 33 ist unmittelbar parallel zur Oberfläche 34 des zu überziehenden Produktes und aus einem Rechteck (Fig. 4) gebildet, das sich parallel zur Trommelachse erstreckt.

Die Spritzvorrichtung 37 ist in möglichst grosser Entfernung von der Mündung 33 angeordnet.

Für einige Produkte, beispielsweise zum Überziehen mit wässerigen Lösungen oder Streuungen ist es empfehlenswert, einen Fühler 38 vorzusehen, der die Temperatur des Produktes misst. Der Fühler wird am Arm 39 des Verteilerrohres 5 abgestützt; dadurch kann das Beibehalten einer konstanten Temperatur gewährleistet werden.

Während des Betriebes bleibt die Oberfläche der zu überziehenden Masse 36 fast immer parallel auf den mit 34 bezeichneten Stand des Materials. Die Neigung dieser Oberfläche hängt von der Trommelgeschwindigkeit und der Art und Menge des zu behandelnden Materials ab. Auf jeden Fall wird dieser Stand zu Beginn beispielsweise in der mit 34' bezeichneten Stellung sein; während das lose Produkt allmählich überzogen wird, erhöht sich die Oberfläche bis sie den Stand 34 erreicht. Diese Erhöhung kann einfach mit dem biegsamen Schlauch 35 absorbiert werden. Für grössere Erhöhungen kann das automatische Heben des Verteilerrohres 5 vorgesehen werden.

Anmelder:

G. S. DI SCIPIONI E GIOGOLI S.n.c.

Via Puglie N. 27

40060 OSTERIA GRANDE (Bo)

<u>P a t e n t a n s p r ü c h e</u>

1.      Drehtrommelvorrichtung zum Überziehen loser Produkte,
bei der eine teilweise in das Produkt und teilweise in die
darüber liegende Kammer (40) eintretende Luftförderung (2)
und eine Luftansaugung (1), sowie eine Spritzvorrichtung (37)
für das den Überzug enthaltende Fluid vorgesehen sind,
dadurch gekennzeichnet, dass der Teil (13) der Luftförderung
(2), die in die über das Produkt liegende Kammer (40) einmündet, gegen die Oberfläche (34) des losen zu überziehenden
Produktes während der durch die Trommeldrehung hervorgerufene
Bewegung gerichtet ist.

2.      Trommel nach Anspruch 1, dadurch gekennzeichnet, dass die Luftförderung in zwei fast gleiche Teile (13, 14) geteilt ist.

3.      Trommel nach Anspruch 1 oder 2, dadurch gekennzeichnet, dass die gegen die Oberfläche (34) gerichtete Luftförderung über einen Förderer (15) geführt wird, dessen Mündung (33) soweit als möglich von der Spritzvorrichtung (37) entfernt ist.

4.      Trommel nach einem der vorstehenden Ansprüche, dadurch gekennzeichnet, dass der Teil (13) der Luftförderung (2) in einer verlängerten Mündung (33) endet, die sich parallel zur Achse der Trommel (30) erstreckt, um die Mündungen der Luftförderung je nach Art und Menge des losen zu überziehenden Produktes sowohl winkelmässig als höhenmässig zu regeln.

5.      Trommel nach einem der vorstehenden Ansprüche, dadurch gekennzeichnet, dass die gegen die Oberfläche (34) des sich in Bewegung befindlichen Produktes gerichtete Fördermündung (33) mit einem biegsamen Schlauch (35) versehen ist, der das fortschreitende Nähern der Masse des losen Produktes während des Vorganges des Überziehens ermöglicht.

FIG. 1

FIG. 4

FIG. 2

FIG. 3